# EUROPÄISCHE PATENTSCHRIFT

(11) **EP 4 288 274 B1**
(45) Veröffentlichungstag und Bekanntmachung des Hinweises auf die Patenterteilung: **17.07.2024**
(21) Anmeldenummer: 21839343.7
(22) Anmeldetag: 08.12.2021
(51) Int. Cl.: B29C 70/32, B29C 70/38, B29C 53/56, B29C 53/80, B29C 53/82, B29K 105/08

(54) **WICKELANLAGE ZUR FERTIGUNG VON FASERVERSTÄRKTEN BAUTEILEN**
WINDING SYSTEM FOR MANUFACTURING FIBER-REINFORCED COMPONENTS
SYSTÈME D'ENROULEMENT POUR FABRIQUER DES COMPOSANTS RENFORCÉS DE FIBRES

(30) Priorität: 05.02.2021 DE 102021000599
(43) Veröffentlichungstag der Anmeldung: 13.12.2023
(73) Patentinhaber: Mercedes-Benz Group AG, 70372 Stuttgart (DE)
(72) Erfinder: MINSCH, Niklas, 72669 Unterensingen (DE); ZANKER, Tim, 71154 Nufringen (DE); GRAUPNER, Peter, 74199 Untergruppenbach (DE)
(74) Vertreter: Novagraaf Group
(86) Internationale Anmeldenummer: PCT/EP2021/084753
(87) Internationale Veröffentlichungsnummer: WO 2022/167127

(56) Entgegenhaltungen:
- DE-A1- 102017 005 754
- DE-A1- 2 423 914
- DE-A1- 3 440 740
- DE-T2- 69 109 819
- DE-T2- 69 416 718

## Beschreibung

Die Erfindung betrifft eine Wickelanlage zur Fertigung von faserverstärkten Bauteilen mittels eines dreidimensionalen Wickelverfahrens, umfassend einen Roboterarm mit mindestens einem Wickelkopf, der eine Vorratsspule für einen Faserstrang sowie eine Impregniereinheit umfasst, durch welche der Faserstrang führbar und mit Harz impregnierbar ist, sowie mit mindestens einer Halterung zur Aufnahme eines Wickelträgers, der vom Faserstrang zur Bildung des Bauteils umwickelbar ist.

Die DE 691 09 819 T2 beschreibt eine Maschine zum Aufspulen und Wickeln rohrförmiger Hülsen aus elastomerem Material, das Cordelemente, Verstärkungsfasern und dergleichen enthält, mit - einer Halte- und Betätigungseinrichtung, die an einer zylindrischen Matrix, auf der die Hülse ausgebildet wird, angreift und diese um eine horizontale Achse dreht, - einer Aufspuleinheit, die gleitend mit wenigstens einem Verstärkungsfaserfaden in Eingriff steht und diesen während der Drehung der Matrix gleichmäßig über die Matrix verteilt, - einer Wickeleinheit, die zur Zuführung wenigstens einer Lage aus elastomerem Material auf die Matrix angeordnet ist, damit diese nach der Drehung der Matrix auf die Matrix aufgewickelt wird, gekennzeichnet durch - eine Aufspulstation, die die Aufspuleinheit trägt und mit einer ersten Einrichtung versehen ist, die die Matrix hält und in Drehung versetzt, - eine Wickelstation, die die Wickeleinheit trägt und mit einer zweiten Einrichtung versehen ist, die die Matrix hält und in Drehung versetzt, - eine sich drehende Plattform, die so angeordnet ist, daß sie an mehreren Matrizen an jeweiligen Verbindungsaufnahmen angreift, die in Umfangsrichtung der Plattform selbst entsprechend einer vorher bestimmten Winkelteilung verteilt sind, wobei die Plattform um eine vertikale Achse entsprechend einer Winkelteilung in Drehung versetzt werden kann, die gleich der Verteilungsteilung der Verbindungsaufnahmen ist,- ein erstes Transportelement, das aus einer ersten Betriebsstellung, in der es an einer der von der Plattform getragenen Matrizen angreift, in eine zweite Betriebsstellung bewegbar ist, in der die Matrix, an der es angreift, seitlich und parallel zu einer weiteren Matrix angeordnet ist, die von der Aufspulstation getragen wird, - ein erstes Kippelement, das zwischen der Aufspulstation und dem sich in der zweiten Betriebsstellung befindlichen ersten Transportelement wirkt, um an den durch die Aufspulstation und durch das erste Transportelement selbst gehaltenen Matrizen anzugreifen und deren gemeinsame Position durch eine 180°-Kippbewegung zu verändern, - ein zweites Transportelement, das aus einer ersten Betriebsstellung, in der es an der Matrix angreift, die zuvor in der Aufspulstation bearbeitet und auf der Plattform durch das erste Transportelement abgelegt wurde, in eine zweite Betriebsstellung bewegbar ist, in der die Matrix seitlich und parallel zu einer weiteren Matrix angeordnet ist, die von der Wickelstation getragen wird, und - ein zweites Kippelement, das zwischen der Wickelstation und dem sich in der zweiten Betriebsstellung befindlichen zweiten Transportelement wirkt, um an den durch die Wickelstation und durch das zweite Transportelement selbst getragenen Matrizen anzugreifen und deren gemeinsame Position durch eine 180°-Kippbewegung zu verändern.

Die Deutsche Patentanmeldung DE 24 23 914 A1 beschreibt eine Maschine zur Herstellung von Rohren, gekennzeichnet durch einen Revolverkopf und mehrere, sich von diesem radial wegerstreckende Rohre, wobei der Revolverkopf mit den Spindeln drehbar ist, so dass die Spindeln im Betrieb mehrere Arbeitsstationen durchlaufen und wobei jede Spindel um ihre Längsachse drehbar ist.

Die Deutsche Patentanmeldung DE 34 40 740 A1 beschreibt eine Anlage zur Herstellung rohrförmiger Bauteile aus faserverstärktem Kunststoff, mit einer Einrichtung, mit der Faserstränge mit einem wärmehärtbaren Bindemittel getränkt werden, mit mindestens einem in eine Wickelmaschine einspannbaren Wickeldorn, auf den die getränkten Faserstränge abgelegt werden, wobei die Wickelmaschine eine parallel zu dem Dorn hin- und her bewegliche Führungseinrichtung für den aufzuwickelnden Faserstrang aufweist, eine Transporteinrichtung, mit der die gewickelten Bauteile durch einen Härteofen zu einer Einrichtung zum Herausziehen der Wickeldorne aus den gehärten Bauteilen und zu wenigstens einer Nachbearbeitungsstation befördert werden, und mit der die leeren Wickeldorne wieder über eine Dornvorbereitungsstation zur Wickelstation zurücktransportiert werden, dadurch gekennzeichnet, dass die Nachbearbeitungsstation zwischen dem Härteofen und der Dornauszieheinrichtung vorgesehen ist.

Aus der DE 10 2017 005 754 A1 ist eine derartige Wickelanlage bekannt, bei der ein Roboterarm mit einem Wickelkopf von einer 8-eckigen Halterung zur Aufnahme von acht Wickelträgern umgeben ist. Die Wickelträger werden nacheinander bewickelt, wobei sich der Roboterarm nach Fertigstellung einer Bewicklung von einem zum nächsten Wickelträger weiterdreht.

Aus der DE 10 2013 014 032 A1 ist ein Verfahren zur Herstellung eines Faserverbundbauteils dargestellt, das mittels einer solchen Wickelanlage hergestellt werden kann. Nachteilig ist, dass die Produktivität und Ausbringung solcher Wickelanlagen relativ gering ist, weil ein Wickelvorgang etliche Zeit erfordert und die Bauteile nur nacheinander an einer solchen Anlage hergestellt werden können.

Aufgabe der Erfindung ist es, eine Wickelanlage bereitzustellen, die einen höheren Durchsatz an erzeugten baugleichen Bauteilen ermöglicht.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe wird gemäß Anspruch 1 dadurch gelöst, dass mindestens zwei Wickelköpfe nebeneinander am Roboterarm angebracht sind und jedem Wickelkopf eine Halterung zur Aufnahme eines Wickelträgers zugeordnet ist, wobei die Halterungen neben- oder übereinander auf einer Fördereinrichtung mit zwei Stellungen angeordnet sind, nämlich einer Wickelstellung zur Bewicklung mit dem Faserstrang und einer Montagestellung zur Montage der Halterungen vor dem Wickelvorgang und zu deren Demontage nach dem Wickelvorgang.

Hierdurch können mindestens zwei baugleiche Bauteile parallel gewickelt werden, weil der Roboterarm mit den Wickelköpfen die gleiche Bewegung zur Bewicklung der Wickelträger ausführt. Es ist erfindungsgemäß möglich, nicht nur zwei, sondern auch deutlich mehr Bauteile zeitgleich parallel herzustellen. Dazu sind die Wickelköpfe und in gleicher Anordnung die gleiche Anzahl an Wickelträgern in einer horizontalen oder vertikalen Reihe oder einer Matrix angeordnet. Um beispielsweise zehn Bauteile zeitgleich zu fertigen, können beispielsweise zwei Reihen mit jeweils fünf Wickelköpfen am Roboterarm angebracht werden. Nach Beendigung der Wickelvorgänge wird die Fördereinrichtung, an der die Wickelträger befestigt sind, so verfahren, dass die bewickelten Wickelträger aus der Wickelstellung in die Montagestellung gelangen, wo die Wickelträger manuell oder vorzugsweise automatisiert entfernt werden. Nach der Entfernung der bewickelten Wickelträger werden manuell oder vorzugsweise automatisiert neue Wickelträger an der Fördereinrichtung angebracht und dann aus dieser Montagestellung wieder in die Wickelstellung gegenüber dem Roboterarm mit den Wickelköpfen gebracht, wo ein neuerlicher Bewickelungsvorgang begonnen wird.

Gemäß einer vorteilhaften Ausbildung der Erfindung sind die mindestens drei Wickelköpfe in einer Reihe neben- oder übereinander angeordnet. Es kann eine größere Anzahl an Wickelköpfen nebeneinander angeordnet werden, wobei die Anzahl nur durch mechanische und dynamische Gesichtspunkte begrenzt ist, aber mindestens 10 parallele Wickelköpfe im Rahmen der Erfindung denkbar sind. Zweckmäßiger ist es jedoch, mehrere Reihen an Wickelköpfen matrixartig in mehreren Reihen anzuordnen, beispielsweise 2 oder 3 Reihen mit je 5 Wickelköpfen und natürlich einer entsprechenden Anzahl an Halterungen zur Befestigung von Wickelträgern.

Gemäß einer vorteilhaften Weiterbildung der Erfindung sind die Wickelstellung und die Montagestellung auf zwei gegenüber liegenden Seiten der Fördereinrichtung angeordnet. Auf diese Weise ist es möglich, die an den Halterungen angebrachten Wickelträger in der Wickelstellung zu bewickeln und in der gleichen Anordnung auf der Rückseite zu entfernen. Die Fördereinrichtung ist also derart ausgebildet, dass auf einer Seite montiert bzw. demontiert und zeitgleich auf der anderen Seite bewickelt wird. Die Fördereinrichtung kann eine schienen- oder bandartige Führung umfassen, entlang der die Halterungen von der Montage- in die Wickelstellung und zurück bewegbar sind. Die Fördereinrichtung kann alternativ als quaderartiges Gestell ausgebildet sein, das an zwei gegenüberliegenden Seiten Halterungen aufweist und um eine horizontale oder vertikale Achse um 180° drehbar ist, um die Halterungen von einer in die andere Stellung zu bringen.

Gemäß einer vorteilhaften Weiterbildung der Erfindung umfasst die Fördereinrichtung ein Endlosband, das über zwei Umlenkeinrichtungen geführt ist und die Wickelstellung und die Montagestellungen der Halterungen auf der zwei bezüglich der Umlenkeinrichtungen gegenüberliegenden Seiten der Endlosfördereinrichtung angeordnet sind. Durch eine derartige "Paternoster"-Anordnung kann auf einer Seite der Fördereinrichtung der Wickelvorgang erfolgen, während zeitgleich auf der anderen Seite eine Demontage fertig gewickelter Rohlinge zur Aushärtung entnommen und neue Wickelträger montiert werden können.

Gemäß einer vorteilhaften Weiterbildung der Erfindung umfassen die Halterungen der Wickelträger motorisch bewegbare Freiheitsgrade, vorzugsweise als Rotationsfreiheitsgrade in Form von Gelenken und/oder auch translatorische Freiheitsgrade. Halterungsseitige Gelenke bewirken eine verbesserte und beschleunigte Umwicklung der Wickelträger, weil ein Teil der notwendigen Relativbewegung zwischen den Wickelköpfen und den Wickelträgern beim Wickelvorgang mittels der Gelenke von den Wickelträgern übernommen werden. Damit werden die bewegten Massen der Wickelköpfe geringer, wodurch der Wickelvorgang beschleunigt durchgeführt werden kann.

Gemäß einer vorteilhaften Weiterbildung der Erfindung weist die Wickelanlage auf der Montageseite der Fördereinrichtung einen Handhabungsroboter zur Montage und Demontage der Wickelträger auf. Ein solcher Handhabungsroboter kann die erzeugten bewickelten Wickelträger nacheinander entfernen und durch neue unbewickelte Wickelträger ersetzen. Es ist auch möglich, eine Demontagevorrichtung vorzusehen, welche alle bewickelten Wickelträger gemeinsam entfernt. Zum Zweck der Aufnahme der bewickelten Wickelträger können auch mehrteilige Formen vorgesehen werden, welche die bewickelten Wickelträger umschließen, um die äußere Form des zu fertigenden Werkstückes zu definieren und dann die geschlossenen Formen von den Halterungen abgenommen werden.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen.

Es zeigt:
- Figur 1: eine schematische Seitenansicht einer erfindungsgemäßen Wickelanlage.
- Figur 2: eine schematische Darstellung einer zweiten Ausführung für eine Fördereinrichtung.

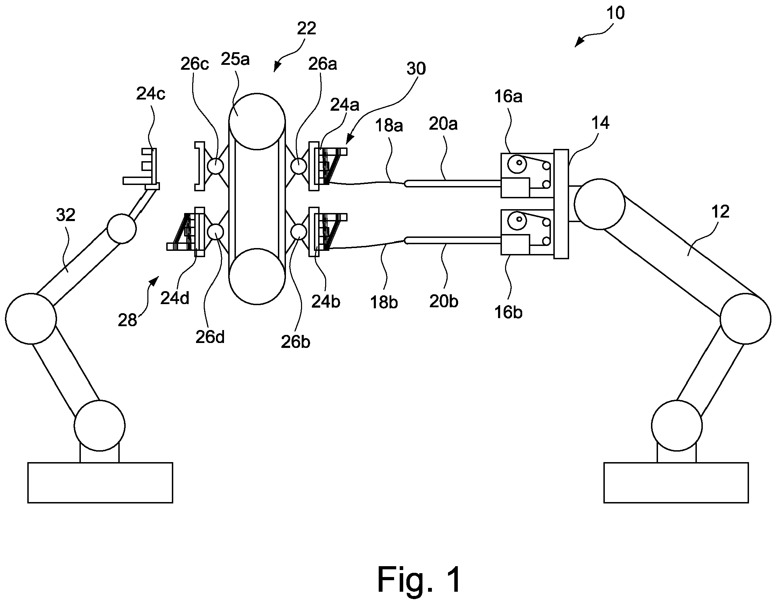

Die Wickelanlage 10 gemäß Figur 1 umfasst einen Gelenkarmroboter 12 mit mehreren Armgliedern, an dessen Handhabungsende eine Haltestruktur 14 angebracht ist, an der eine Anzahl an Wickelköpfen 16a, 16b montiert sind. Diese Wickelköpfe 16a, 16b umfassen jeweils mindestens eine Faserspule und eine Impregniereinheit, welche mindestens ein auf der Faserspule aufgewickelter Faserstrang bzw. Roving 18a, 18b durchläuft und flüssiges Harz zugemischt wird. Es können mehrere Faserspulen vorgesehen werden, so dass in der Impregniereinheit mehrere Faserstränge zu einem Faserstrang 18a, 18b vereinigt werden und über ein Faserablagerohr 20a, 20b austreten.

In Figur 1 ist die Wickelanlage 10 in Seitenansicht gezeigt und es sind zwei Wickelköpfe 16a, 16b dargestellt. Es kann sich im Rahmen der Erfindung um zwei Reihen nebeneinander angeordneter Wickelköpfe 16a, 16b handeln, also hinter dem Wickelkopf 16a können mehrere weitere nicht gezeigte Wickelköpfe angeordnet sein.

Vor dem Gelenkarmroboter 12 ist eine Wickelträger-Halteeinrichtung 22 angeordnet, die dazu dient, eine Anzahl von Wickelträgern 24a, 24b für die Bewicklung mit den Rovings bzw. Fasersträngen 18a, 18b bereitzustellen, zu halten und auszutauschen. Die Wickelträger-Halteeinrichtung 22 umfasst eine Fördereinrichtung 25a mit einer Anzahl an Halterungen 26a, 26b zum Halten und Fixieren der Wickelträger 24a, 24b. Die Halterungen 26a, 26b können mehrere Rotations- bzw. Translationsfreiheitsgrade aufweisen, um die Position der Wickelträger 24a, 24b im Raum zu verändern und damit einen Wickelvorgang zu vereinfachen und zu beschleunigen.

Die Anzahl und Anordnung der Wickelträger 24a, 24b und Halterungen 26a, 26b entspricht derjenigen der Wickelköpfe 16a, 16b, damit die Wickelvorgänge alle parallel zueinander ablaufen. Sofern die Halterungen 26a, 26b Bewegungsfreiheitsgrade aufweisen, werden diese natürlich auch alle synchron zueinander automatisiert bewegt.

Für die Halterungen 26a, 26b auf der Wickelträger-Halteeinrichtung 22 bzw. der Fördereinrichtung 25a sind zwei Stellungen vorgesehen, nämlich eine Montagestellung 28 und eine auf der gegenüberliegenden, dem Gelenkarmroboter 12 zugewandten Seite angeordnete Wickelstellung 30. Bei Ausbildung der Fördereinrichtung 25 als paternosterartige Endlosfördereinrichtung führt eine Aktivierung der Fördereinrichtung 25 dazu, dass eine Anzahl an Halterungen 26c, 26d - dann mit unbewickelten Wickelträgern 24c, 26d - aus der Montagestellung 28 in die Wickelstellung 30 bewegt werden während gleichzeitig eine gleiche Anzahl an Halterungen 26a, 26b mit bewickelten Wickelträgern 24a, 26b umgekehrt aus der Wickelstellung 30 in die Montagestellung 28 bewegt werden.

Auf der der Montagestellung 28 zugewandten Seite der Wickelträger-Halteeinrichtung 22 ist ein Handhabungsroboter 32 angeordnet, wobei es sich wiederum vorzugsweise um einen Mehrgelenkroboter handelt. Der Handhabungsroboter 32 dient dazu, fertig bewickelte Wickelträger 24d zu entfernen für die Aushärtung des Harzes sowie zur Montage unbewickelter Wickelträger 24c.

Im Betrieb wird der Handhabungsroboter 32 auf der Montageseite der Wickelträger-Halteeinrichtung 22 frische, unbewickelte Wickelträger 24c an den Halterungen 26c, 26d anbringen. Dann fährt die Fördereinrichtung 25a die Halterungen 26c, 26d auf die gegenüberliegende Seite in die Wickelstellung 30. Dann werden die freien Enden der Faserstränge 18a, 18b an den Wickelträgern (nunmehr Bezugszeichen 24a, 24b) angebracht und der Gelenkarmroboter 12 fängt an, ein vorgegebenes Wickelprogramm auszuführen, also die Wickelköpfe 16a, 16b derart zu bewegen, dass die Spitzen der Faserablagerohre 20a, 20b um an den Wickelträgern 24a, 24b ausgebildeten Strukturen entlang bewegt werden, wobei durch den ausgeübten Zug die Faserstränge 18a, 18b aus den Wickelköpfen 16a, 16b und durch die Faserablagerohre 20a, 20b gezogen werden. Soweit die Halterungen 26a, 26b entsprechende Freiheitsgrade aufweisen, werden diese parallel und synchron und im Zusammenwirken mit den Bewegungen der Faserablagerohre 20a, 20b bewegt, um den Wickelvorgang zu beschleunigen bzw. zu verbessern. Nach Beendigung eines Wickelvorgangs werden die Faserstränge 18a, 18b auf der Montagsseite gekappt. Alternativ ist es möglich, auf der Wickelseite eine Vorrichtung pro Wickelträger 24, 24b vorzusehen, welche nach Beendigung des Wickelvorgangs die Faserstränge 18a, 18b auftrennt und nach Austausch der bewickelten durch unbewickelte Wickelträger die Enden der Faserstränge 18a, 18b an den unbewickelte Wickelträgern zu fixieren, so dass anschließend das vorgegebene Wickelprogramm erneut ausgeführt werden kann.

Gleichzeitig mit dem Wickelvorgang erfolgt auf der Montageseite 28 mittels des Handhabungsroboters 32 eine Beschickung der dortigen Halterungen 26c, 26d mit unbewickelten Wickelträgern 26c.

Wenn der Wickelvorgang abgeschlossen ist, wird die Fördereinrichtung 25a in Bewegung gesetzt, wodurch die bewickelten Wickelträgern 24a, 24b aus der Wickelstellung 30 in die Montagestellung 28 bewegt werden, während gleichzeitig die unbewickelten Wickelträger 26c aus der Montagestellung 28 in die Wickelstellung 30 bewegt werden. Mittels des Handhabungsroboters 32 erfolgt ein Austausch der bewickelten 24d durch unbewickelte Wickelträger 24c, während gleichzeitig die in der Wickelstellung 30 befindlichen Wickelträger 24a, 24b bewickelt werden.

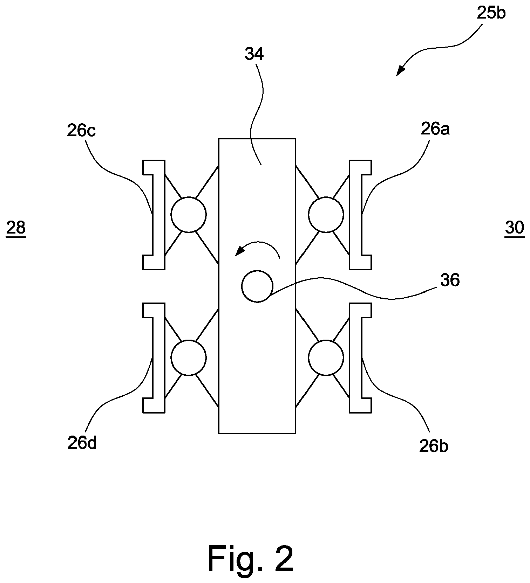

In Figur 2 ist eine zweite Ausführungsform der Fördereinrichtung 25b dargestellt, die einen Rahmen 34 umfasst, der um eine Drehachse 36 drehbar ist. In Figur 2 ist eine horizontale Drehachse 36 dargestellt, diese kann allerdings im Rahmen der Erfindung auch vertikal ausgerichtet sein. Durch Drehung des Rahmens 34 um 180° werden die Halterungen 26a, 26b aus der Wickelstellung 30 auf die Montageseite 28 und die Halterungen 26c, 26c von der Montagestellung 28 in die Wickelstellung 30 bewegt.

Obwohl die Erfindung im Detail durch ein bevorzugtes Ausführungsbeispiel näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Der Schutzumfang wird durch die Ansprüche definiert. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10: Wickelanlage
- 12: Gelenkarmroboter
- 14: Haltestruktur
- 16a,b: Wickelköpfe
- 18a,b: Faserstrang
- 20a,b: Faserablagerohr
- 22: Wickelträger-Halteeinrichtung
- 24a-d: Wickelträger
- 25a,b: Fördereinrichtung
- 26a-d: Halterungen
- 28: Montagestellung
- 30: Wickelstellung
- 32: Handhabungsroboter
- 34: Rahmen
- 36: Drehachse

## Patentansprüche

1. Wickelanlage (10) zur Fertigung von faserverstärkten Bauteilen mittels eines dreidimensionalen Wickelverfahrens, umfassend einen Roboterarm (12) mit mindestens einem Wickelkopf (16a, 16b), der mindestens eine Vorratsspule für einen Faserstrang (18a, 18b) sowie eine Impregniereinheit umfasst, durch welche der Faserstrang (18a, 18b) führbar und mit Harz impregnierbar ist, sowie mindestens einer Halterung (26a, 26b, 26c, 26d) zur Aufnahme eines Wickelträgers (24a, 24b, 24c, 24d), der vom Faserstrang (18a, 18b) zur Bildung des Bauteils umwickelbar ist,
**dadurch gekennzeichnet, dass**
mindestens zwei Wickelköpfe (16a, 16b) neben- oder übereinander am Roboterarm (12) angebracht sind und jedem Wickelkopf (16a, 16b) eine Halterung (26a, 26b, 26c, 26d) zur Aufnahme eines Wickelträgers (24a, 24b, 24c, 24d) zugeordnet ist, wobei die Halterungen (26a, 26b, 26c, 26d) nebeneinander auf einer Fördereinrichtung (25) mit zwei Stellungen angeordnet sind, nämlich einer Wickelstellung (30) zur Bewicklung mit dem Faserstrang (18a, 18b) und einer Montagestellung (28) zur Montage der Halterungen (26a, 26b, 26c, 26d) vor dem Wickelvorgang und deren Demontage nach dem Wickelvorgang.

2. Wickelanlage nach Anspruch 1, **dadurch gekennzeichnet, dass** die mindestens drei Wickelköpfe (16a, 16b) in einer Reihe neben- oder übereinander angeordnet sind.

3. Wickelanlage nach einem der vorhergehenden Ansprüche, **dadurch gekennzeichnet, dass** eine Anzahl Wickelköpfe (16a, 16b) matrixartig in zwei oder mehr parallelen Reihen angeordnet sind.

4. Wickelanlage nach Anspruch 1 oder 2, **dadurch gekennzeichnet, dass** die Wickelstellung (30) und die Montagestellung (28) auf zwei gegenüber liegenden Seiten der Fördereinrichtung (25) angeordnet sind.

5. Wickelanlage nach einem der vorhergehenden Ansprüche, **dadurch gekennzeichnet, dass** die Fördereinrichtung (25) ein Endlosband umfasst, das über zwei Umlenkeinrichtungen geführt ist und die Wickelstellung (30) und die Montagestellung (28) der Halterungen (26a, 26b, 26c, 26d) auf der zwei bezüglich der Umlenkeinrichtungen gegenüberliegenden Seiten der Fördereinrichtung (25) angeordnet sind.

6. Wickelanlage nach einem der vorhergehenden Ansprüche, **dadurch gekennzeichnet, dass** die Halterungen (26a, 26b, 26c, 26d) der Wickelträger (24a, 24b, 24c, 24d) motorisch bewegbare Freiheitsgrade umfassen.

7. Wickelanlage nach Anspruch 6, **dadurch gekennzeichnet, dass** die Freiheitsgrade als Gelenke mit einem, zwei oder drei Rotationsfreiheitsgraden ausgebildet sind.

8. Wickelanlage nach Anspruch 6 oder 7, **dadurch gekennzeichnet, dass** die Freiheitsgrade einen oder zwei Translationsfreiheitsgrade umfassen.

9. Wickelanlage nach einem der vorhergehenden Ansprüche, **dadurch gekennzeichnet, dass** diese auf der Montageseite (28) der Fördereinrichtung (25) einen Handhabungsroboter (32) zur Montage und Demontage der Wickelköpfe aufweist.

## Claims

1. Winding system (10) for manufacturing fiber-reinforced components by means of a three-dimensional winding process, comprising a robot arm (12) having at least one winding head (16a, 16b), which comprises at least one supply spool for a fiber strand (18a, 18b) and an impregnation unit through which the fiber strand (18a, 18b) can be guided and impregnated with resin, and at least one holder (26a, 26b, 26c, 26d) for receiving a winding carrier (24a, 24b, 24c, 24d) around which the fiber strand (18a, 18b) can be wound to form the component,
**characterized in that**
at least two winding heads (16a, 16b) are attached next to one another or one above the other on the robot arm (12), and each winding head (16a, 16b) is associated with a holder (26a, 26b, 26c, 26d) for receiving a winding carrier (24a, 24b, 24c, 24d), the holders (26a, 26b, 26c, 26d) being arranged next to one another on a conveying device (25) with two positions, specifically a winding position (30) for winding with the fiber strand (18a, 18b) and a mounting position (28) for mounting the holders (26a, 26b, 26c, 26d) before the winding process and removing them after the winding process.

2. Winding system according to claim 1, **characterized in that** the at least three winding heads (16a, 16b) are arranged in a row next to one another or one above the other.

3. Winding system according to either of the preceding claims,
**characterized in that** a number of winding heads (16a, 16b) are arranged in a matrix-like manner in two or more parallel rows.

4. Winding system according to either claim 1 or claim 2,
**characterized in that** the winding position (30) and the mounting position (28) are arranged on two opposite sides of the conveying device (25).

5. Winding system according to any of the preceding claims,
**characterized in that** the conveying device (25) comprises an endless strip which is guided over two deflection devices, and the winding position (30) and the mounting position (28) of the holders (26a, 26b, 26c, 26d) are arranged on the two opposite sides of the conveying device (25) with respect to the deflection devices.

6. Winding system according to any of the preceding claims,
**characterized in that** the holders (26a, 26b, 26c, 26d) of the winding carriers (24a, 24b, 24c, 24d) comprise degrees of freedom which are movable by means of a motor.

7. Winding system according to claim 6, **characterized in that** the degrees of freedom are designed as joints having one, two or three rotational degrees of freedom.

8. Winding system according to either claim 6 or claim 7, **characterized in that** the degrees of freedom comprise one or two translational degrees of freedom.

9. Winding system according to any of the preceding claims,
**characterized in that** said winding system has a handling robot (32) for mounting and removing the winding heads on the mounting side (28) of the conveying device(25).

## Revendications

1. Installation d'enroulement (10) pour la fabrication de composants renforcés de fibres au moyen d'un procédé d'enroulement tridimensionnel, comprenant un bras de robot (12) comportant au moins une tête d'enroulement (16a, 16b), laquelle comprend au moins une bobine de réserve pour un cordon de fibres (18a, 18b) ainsi qu'une unité d'imprégnation, à travers laquelle le cordon de fibres (18a, 18b) peut être guidé et imprégné de résine, ainsi qu'au moins un élément de maintien (26a, 26b, 26c, 26d) destiné à recevoir un support d'enroulement (24a, 24b, 24c, 24d) autour duquel peut être enroulé le cordon de fibres (18a, 18b) pour la formation du composant,
**caractérisée en ce que**
au moins deux têtes d'enroulement (16a, 16b) sont montées l'une à côté ou au-dessus de l'autre sur le bras de robot (12) et à chaque tête d'enroulement (16a, 16b) est associé un élément de maintien (26a, 26b, 26c, 26d) pour la réception d'un support d'enroulement (24a, 24b, 24c, 24d), dans laquelle les éléments de maintien (26a, 26b, 26c, 26d) sont agencés les uns à côté des autres sur un dispositif de transport (25) avec deux positions, à savoir une position d'enroulement (30) pour l'enroulement avec le cordon de fibres (18a, 18b) et une position de montage (28) pour le montage des éléments de maintien (26a, 26b, 26c, 26d) avant le processus d'enroulement et leur démontage après le processus d'enroulement.

2. Installation d'enroulement selon la revendication 1, **caractérisée en ce que** les au moins trois têtes d'enroulement (16a, 16b) sont agencées en une rangée, les unes à côté ou au-dessus des autres.

3. Installation d'enroulement selon l'une des revendications précédentes,
**caractérisée en ce qu'**un certain nombre de têtes d'enroulement (16a, 16b) sont agencées de manière matricielle en deux rangées parallèles ou plus.

4. Installation d'enroulement selon la revendication 1 ou 2,
**caractérisée en ce que** la position d'enroulement (30) et la position de montage (28) sont agencées sur deux côtés opposés du dispositif de transport (25).

5. Installation d'enroulement selon l'une des revendications précédentes,
**caractérisée en ce que** le dispositif de transport (25) comprend une bande sans fin, laquelle est guidée par l'intermédiaire de deux dispositifs de renvoi, et la position d'enroulement (30) et la position de montage (28) des éléments de maintien (26a, 26b, 26c, 26d) sont agencées sur les deux côtés du dispositif de transport (25), lesquels sont opposés par rapport aux dispositifs de renvoi.

6. Installation d'enroulement selon l'une des revendications précédentes,
**caractérisée en ce que** les éléments de maintien (26a, 26b, 26c, 26d) des supports d'enroulement (24a, 24b, 24c, 24d) comprennent des degrés de liberté pouvant être déplacés par un moteur.

7. Installation d'enroulement selon la revendication 6, **caractérisée en ce que** les degrés de liberté sont conçus comme des articulations comportant un, deux ou trois degrés de liberté de rotation.

8. Installation d'enroulement selon la revendication 6 ou 7,
**caractérisée en ce que** les degrés de liberté comprennent un ou deux degrés de liberté de translation.

9. Installation d'enroulement selon l'une des revendications précédentes,
**caractérisée en ce qu'**elle présente, du côté de montage (28) du dispositif de transport (25), un robot de manipulation (32) pour le montage et le démontage des têtes d'enroulement.
